# EUROPEAN PATENT APPLICATION

(11) **EP 1 744 263 A2**
(43) Date of publication of application: **17.01.2007**
(21) Application number: 06253676.8
(22) Date of filing: 13.07.2006
(51) Int. Cl.: G06F 21/20

(54) **Password management system**

(30) Priority: 13.07.2005 GB 0514377
(71) Applicant: Kemshall, Andrew Christopher, Basingstoke, RG22 5EP (GB)
(72) Inventor: Kemshall, Andrew Christopher, Basingstoke, RG22 5EP (GB)
(74) Representative: Roberts, Michael Austin

(57) **Abstract**

A password management system is based on a complex password format having two portions, a first portion which stays the same and a second portion which can be regularly updated. The first portion may for example be a Personal Identification Number ("PIN") and memorable. The second portion meanwhile does not have to be memorable. The password management system works with an operating system which uses passwords matched in length to the complex password format. The passwords can be regularly updated by the password management system by providing a fresh second portion of the complex password. This is put together with the existing first portion and the whole is used as an update of the password records in the managed operating system. At the same time, the fresh portion of the password is made available to the relevant user, for instance via a mobile telephone. The user can then reconstruct the updated complex password by adding the memorable first portion to the fresh portion they have received.

## Description

The present invention relates to a password management system and a method of password management. It finds particular but not exclusive application in managing passwords for computer access.

It is known to maintain the "strength" of passwords by changing them periodically and indeed passwords can be considered to be a security risk if they are not changed by a user on a frequent basis. Typically users will be mandated to choose a new password every thirty days and may for example be forced to have a combination of upper and lower case characters, at least one numeric and a minimum length of eight characters. This type of password policy enforcement usually leads to a number of users forgetting the password they have chosen which in turn leads to an elevated number of IT ("Information Technology") support calls to helpdesks to request password resets.

According to a first aspect of embodiments of the present invention, there is provided a password management system, which system comprises:
i) a password updater for updating a password stored in a first storage location, said stored password comprising a combination of a first portion and a second portion;
ii) a password change controller for controlling changes in the second portion of the stored password; and
iii) a password change output for outputting changes made by said controller in said second portion to one or more second storage locations;
wherein the password updater is adapted to update the password stored in the first storage location to comprise said first portion in combination with a second portion changed by the password change controller, which changed second portion is then available at the one or more second storage locations by means of the password change output.

Embodiments of the invention can provide an automated process whereby users are sent a password rather than having to create and enter their own. This automatically generated password is split into two parts. One part remains static and is assigned to the user when first enrolled. The second part is generated periodically and sent to a location where it can be stored and referred to later by a user having a user device.

Embodiments of the invention thus provide a system for updating part only of a compound password. The whole password is stored and updated at the first location and just the updated portion can be sent to, or read from, a second location. The first location might be for example a password store for an authentication process in a software-based system and the second location might be for example a voicemail or email system, a user's device such as a mobile telephone, personal digital assistant or a home computer, separate from that software-based system. For instance, the authentication process might run in the workplace. When a change occurs in the second portion of a password, the password used by the authentication process is updated by the password updater and information about the change becomes available to a user's device.

Only the changed portion of the password, or "fresh" portion, is available to the user's device. The user still has to remember the first portion of the password which isn't changed but this is considerably easier than remembering a whole new password.

It is an important aspect of embodiments of the present invention that the password management system can be used with pre-existing authentication processes of pre-existing operating systems to create two factor password authentication where there was only single step, unitary-style password authentication. There is no modification necessary in the pre-existing authentication processes or the pre-existing operating systems which still operate using unitary-style passwords but the user instead is given two-factor authentication. Thus important embodiments of the present invention apply where the first storage location is adapted to hold unitary passwords: passwords that are always dealt with as a whole. A password management system according to the present invention enhances the authentication processes which deal only with unitary passwords by effectively providing two factor authentication but without modifying the existing authentication processes in any way.

Passwords stored for known authentication processes generally can be reset but not read. This aids security. In order for the password management system of embodiments of the present invention to maintain a constant first portion of the password without being able to read it from the stored passwords, it may further comprise a password portion store for storing copies of first portions of passwords stored in said first storage location. The password updater can then be adapted to assemble an updated password for use in updating the password stored in the first storage location by reading a first portion of the password from the password portion store and combining with it the second portion provided by the password change controller. It then updates the password stored in the first storage location by sending the first portion together with the changed second portion to provide a "whole" updated unitary password for use at the managed operating system.

The password portion store may be provided by a user profile store for storing personal identification numbers, each for use as a first portion of a password in respect of a user.

In an example, a password provides two factor authentication. This might be for example a password made up of a PIN (Personal Identification Number) plus a passcode. The PIN provides the first portion of the password and the passcode provides the second, updatable portion. Together the PIN and passcode can provide relatively strong security. The PIN doesn't change and has to be remembered by the user. Changes in the passcode portion can however be read or stored at the user's device.

### (Passcode is a known term for a portion of code used in a password and is often embodied as a random selection of letters, numerals and/or symbols.)

The stored password might for example be stored for use in a personal authentication process protecting access to equipment, a computer or website. Known computer operating systems use security codes as passwords in this manner. In embodiments of the present invention, the stored password for the authentication process can be updated by receipt of a fresh portion as a new second portion, that fresh portion being synchronously made available to a relevant user via the second storage location.

In practice, a storage location in embodiments of the present invention may comprise more than one physical location. For example, in a relational database PINs and passcodes may be stored in different tables but can be associated by a pointer or reference. An important point though is that the first storage location can be an existing storage facility for an existing authentication process, however it is organised, and embodiments of the present invention require no modification to an existing authenticated software-based system.

To provide strong protection, changes in the second portion of the password made by the password change controller may comprise newly generated, preferably random, passcode.

It will be understood that the order of the portions in the password is not important. "First" and "second" portions are not used here to indicate order and indeed the "first" portion could be embedded in, or mixed with, the "second" portion and vice versa. Also, there may be more than two portions.

Embodiments of this invention can provide an automated process whereby users are sent updates to a password rather than having to create and enter their own. This automatically generated password can have the compound format described above, being split into at least two parts, one of which is static and another of which is updatable. The static part can be assigned to a user when first enrolled in relation to the password management system.

The password is split into two parts to provide at least two factor authentication (in a similar manner to an ATM machine) such that if a user's device is lost or stolen, the fixed portion of the password, for instance a PIN, remains secret and thus protects the user's account long enough for the user to report the device missing and have the password disabled. On the other hand, the password being authenticated is changed on a regular basis by changing the second portion, this providing good security against hacking of the equipment, computer or website being protected.

The first storage location is preferably remote from the second storage location, for instance having separate network addresses or perhaps having addresses in different networks. For example, the first storage location might be a data store supporting an authentication process on a computer in the workplace while the second storage location might be the SIM ("Subscriber Identity Module") card or handset of a mobile phone. In this case, the first storage location might be accessible to the password updater over a local data network or over the Internet while the second storage location is accessible via a public telephone network. In practice, the first storage location may even share the same operating system as that supporting the password management system.

The nature of the second storage location in practice depends on the method of delivering the second portion of the password. This might be for example by email, paging or voice message. In these cases, the second storage location could be data storage administered for example by a network or service operator rather than the actual user device. However, the second storage location needs to be accessible to the user device.

Conveniently the device available to the user would be a mobile phone capable of receiving text messages but it may also be other devices that are capable of delivering the fresh portions of an updated password to a user.

According to a second aspect of the present invention, there is provided a method of updating a password stored for use in an authentication process, the method comprising:
i) assembling an updated password by referring to a data store for a first portion of the updated password and adding a fresh second portion thereto;
ii) resetting the password stored for use in the authentication process to the updated password; and
iii) making the fresh portion accessible to or via a user device.

A preferred embodiment of the invention will now be described, by way of example only, with reference to the accompanying drawings in which:
Figure 1 shows a block diagram of a network context for embodiments of the invention;
Figure 2 shows a functional block diagram of a password management system for use in the network context of Figure 1;
Figure 3 shows a flow diagram for an installation and user enrolment process using the password management system of Figure 2;
Figure 4 shows a flow diagram for batch password update using the password management system of Figure 2; and
Figure 5 shows a flow diagram for a user logon process to a managed operating system subject to the password management system of Figure 2.

### NETWORK CONTEXT

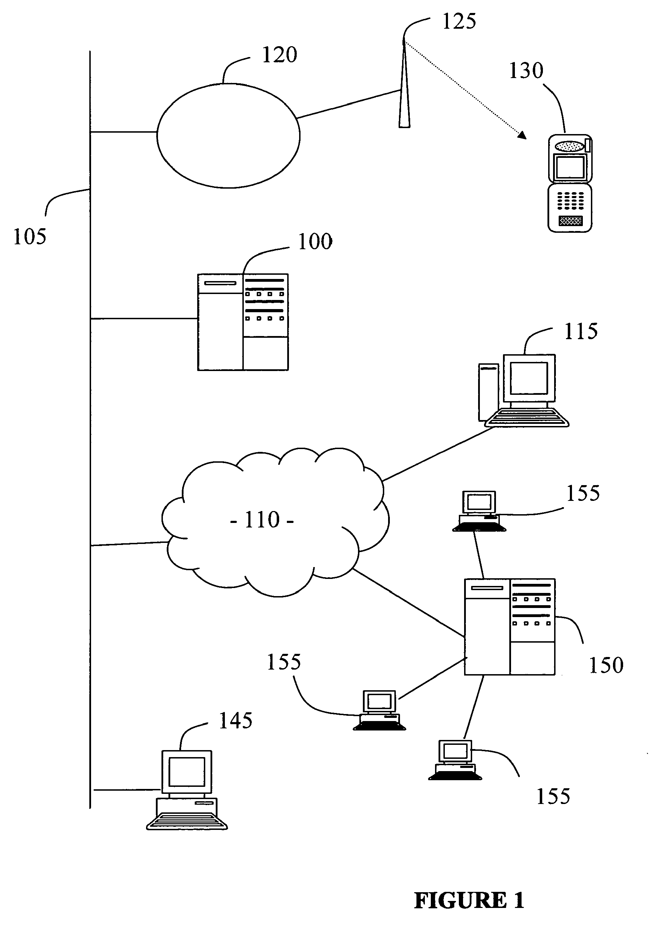

Referring to Figure 1, a network context for embodiments of the invention comprises a password server 100 connected to a local area network ("LAN") 105 which is connected in turn to the Internet 110. There is a local terminal 145 connected to the LAN 105 for administrative access to the password server 100 and a workplace computer 115 is connected for communication over the Internet 110. A user's mobile device 130 can communicate with the password server 100 by means of a public telephone network 120 and a base station 125 in the normal way.

Additionally, there is a workplace computing system 150 connected to the Internet 110 and running an operating system, with multiple desktops 155 for different users, all using the operating system of the workplace computing system 150.

### PASSWORD MANAGEMENT SYSTEM

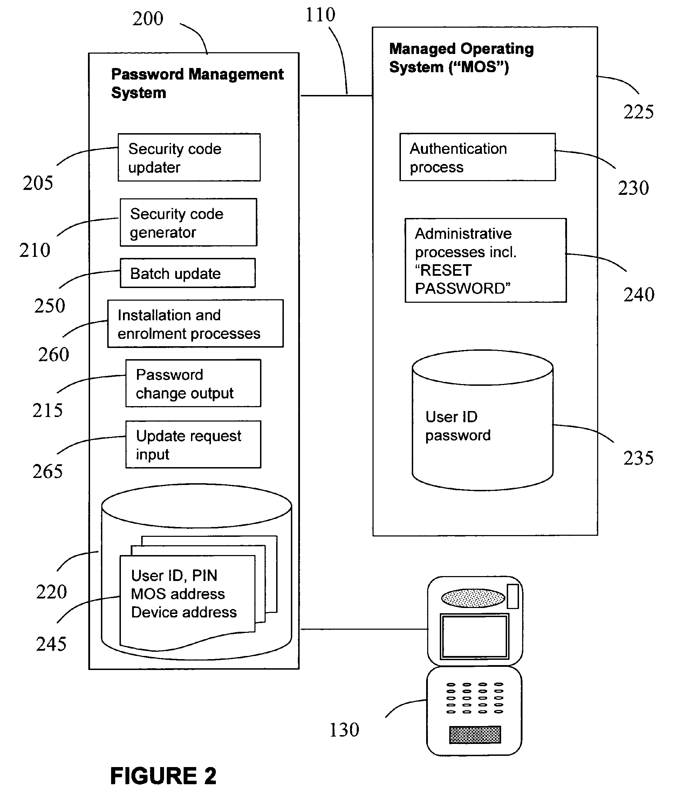

Referring to Figure 2, a password management system 200 for use in the context of Figure 1 will be installed on the password server 100 and comprises a password updater 205, a password change controller which in this case is a security code generator 210, a batch update process 250, installation and enrolment processes 260, a password change output 215 and a data store 220. The data store 220 holds a set of user profiles 245, each user profile being arranged to hold the following set of data in respect of each user:
- user ID
- PIN
- managed operating system address
- an address for access via a user device, such as a mobile telephone number

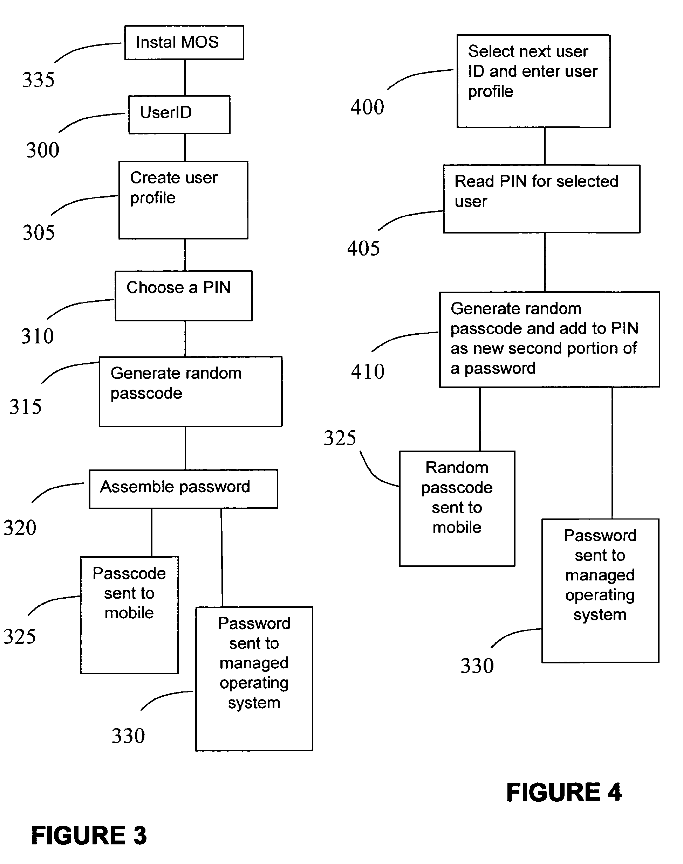

The components of the password management system 200 are each further described below, particularly with reference to the flow diagrams shown in Figures 3, 4 and 5.

### MANAGED OPERATING SYSTEM

The managed operating system 225 meanwhile is of known type and provides an authentication process 230, a data store 235 for use with the authentication process 230 and holding for each user an identity code ("ID") and an updatable password, and known administrative processes 240 including a RESET PASSWORD function for updating passwords which can be run by another piece of software communicating over the Internet 110.

### INSTALLATION AND ENROLMENT PROCESS 260

Referring to Figures 2 and 3, to use the password management system 200, firstly the managed operating system 225 has to be installed and then users each have to be enrolled. On enrolment, details concerning the user have to be entered to a user profile 245 maintained by the system 200. This can be done using an installation and enrolment process 260 providing the following steps:
STEP 335: installation of the managed operating system 225
STEP 300: entry of user ID
STEP 305: creation of a user profile
STEP 310: selection of a PIN
STEP 315: generation of random passcode to use as a portion of a password
STEP 320: assembling the PIN and passcode to form a password
STEP 325: transmission of the passcode only to the user's personal mobile device 130
STEP 330: transmission (using a secure channel for instance) to and installation of the password in the existing password store 235 of the managed operating system 225.

In STEP 335, installation of the managed operating system 225 is a fairly standard procedure to allow the password management system 200 to communicate correctly with it. This requires configuration of the managed operating system address and any secure communications channels and interface requirements that may apply.

One further item of data that will generally be necessary at installation is an ID for the password management system 200 to use when communicating with the managed operating system 225. This needs to be an ID which the managed operating system 225 recognises as having administrative privileges

STEPS 300, 305 and 310: these steps concern enrolment of users. Where a user's operating system 225 is already installed with regard to the password management system 200, then enrolment mainly comprises the population of a user profile 245 in the password management system 200. It could be done on behalf of multiple users via the managed operating system 225, as long as it already holds all the relevant data in its data store 235, or could be done at the instigation of an individual user. If a user has a choice of operating systems 225 which have been installed with the password management system 200, then it would be necessary to identify a selected operating system in the user profile 245.

A user profile 245 will usually hold the following data:
**user ID**
**PIN** (can be made up of numbers, characters or a combination of the two)
**mobile telephone number** (or other address to a location accessible via a user device)

It will be understood that the personal mobile device 130 could in practice be something other than or more than a telephone, such as a personal digital assistant or a laptop computer. The mobile telephone number may thus in practice be replaced by another form of network address such as an Internet or LAN address.

It would be possible for a user to access the system 200 to enrol over the Internet 110 from any suitable device or terminal, including the workplace computer 115 they will be using, or their personal mobile device 130.

STEP 315, the generation of a random portion of a password, can then be carried out by the security code generator 210 in known manner. There are known processes for creating random code with a range of degrees of randomness. In practice, it is even possible that this portion of the password is not random but has some form of structure or known genesis. Importantly though, it does not have to be memorable or known to the user since the user only has to read it from their personal mobile device 130.

STEP 320 is the step of assembling a password by putting together the random passcode from STEP 315 with the user's existing and unchanged PIN.

### TRANSMISSION OF PASSWORD AND PASSCODE

STEPs 325 and 330 can then be carried out in parallel, as shown in Figure 3. Transmission, preferably by secure channel, and installation of the password at the managed operating system 225 can all be done in known manner. In STEP 330 for example, installation of the updated password at the managed operating system 225 can be done using a known password reset command of system software such as "Active Directory". (Active Directory is an object-based Microsoft product for use in Windows environments which allows administrators to manage the multiple computers of an entire organisation in a synchronised manner. An Active Directory stores information and settings of the whole organisation in an accessible, central database.)

In STEP 325, transmission of the random portion only to the user's personal mobile device 130 by the password change output 215 can be done in a range of known ways, including for example:
- Simple Message System ("SMS") messages
- Voice synthesised message to a telephone
- Facsimile
- Pager
- Email
- Internet messaging services
- Internet federated identity service

In each case, the data necessary to support the transmission, such as a mobile number but optionally a pager number, email address or whatever is required, can be stored in the user profiles 245.

It is important to note that a conventional mobile device can be used. No modifications or installations have to be made at the mobile device. Equally, a conventional operating system can be used as the managed operating system 225 with no modifications.

Where SMS messages are used, this might be done in different (but still known) ways, for example:
**Method One:-** Via a modem that is connected to a computer which sends the SMS message in a similar way to a mobile phone (that is, it transmits the SMS message across the air). This method requires an active account with one of the telco providers and in the same way a phone works, a SIM card is inserted into the modem.
**Method Two:-** Via a secure connection across the Internet to a SMS Gateway Provider.
Various third party companies can receive message information across the gateway and convert them to SMS text which are then delivered to the relevant user's personal mobile device 130.

Storage of the random passcode once it has been received at the user's personal mobile device 130 can be done in known manner. It is possible to embed in an SMS message an instruction to the mobile device 130 as to where it should be stored, either on the SIM card or in the handset's memory. When the message holding the passcode is received at the telephone, the user sees a sender's number or reference against the incoming message and this can be set at the security code output function 215 of the password management system 200 to give a name that identifies the incoming message to the user as holding a passcode. For instance it might show the name of the company running the password management system 200. The stored message will have a reference stored against it and again this can be set to identify the message as containing a passcode.

### PASSWORD UPDATE (batch process or one-off)

Referring to Figures 2 and 4, a key aspect of embodiments of the present invention is the automated update of the random portion of the password at the managed operating system 225, synchronously with transmission to the user's mobile device 130. This can be triggered by a batch process 250 which runs periodically, for example every one, seven or thirty days.

The batch process 250 either carries out or triggers the following steps for each user ID:
STEP 400: select next user ID and enter the user profile 245 for that user
STEP 405: access and read the PIN for that user
STEP 410: generate a fresh random portion for a password and create a fresh password by combining the fresh portion with the existing PIN
STEPS 325 and 330: as described above

In STEPs 400 and 405, the batch process 250 accesses the user profiles 245 in the data store 220 supporting the password management system 200 to obtain the user IDs, PINs and MOS addresses stored there, together with any administrative ID necessary for the password management system 200 to communicate with the managed operating system 225.

In STEP 410, the security code generator 210 (or password change controller 210) generates a fresh portion of the password to be combined with the PIN. The fresh portion comprises a random code having 6-8 characters and/or numbers. The fresh portion is then combined with the existing PIN to generate a new password and STEPS 325 and 330 are repeated as described above.

In practice, it isn't essential that a password update is triggered by the batch process 250. It is an alternative that the user triggers a "one-off" update on demand or each time they log on. This provides significantly increased security but requires that the password management process 200 has an update request input 265 in order to trigger the update. This might receive an update request, for instance either via the managed operating system 225 when the user logs on or from a user device, in the same manner as user enrolment. On receipt of an update request, the password update occurs in the same manner as a batch update but in respect of the relevant user only. To do this, the passport management system 200 needs both the user ID and PIN in order to update the password store 235 of the managed operating system 225, and the address of a storage location accessible via the user device 130. The user ID might be provided as part of an update request or a usual logon process (see "USE OF PASSWORD" below) and the relevant PIN and address will be available in the user profile 245 associated with that user ID or again one or both might be provided as part of the update request.

### USE OF PASSWORD (user logon)

When the user needs to logon to the operating system 225, they first enter their User ID followed by a password that comprises the PIN that was set when they first enrolled and the code which is retrieved using their mobile phone or other communications device 130.

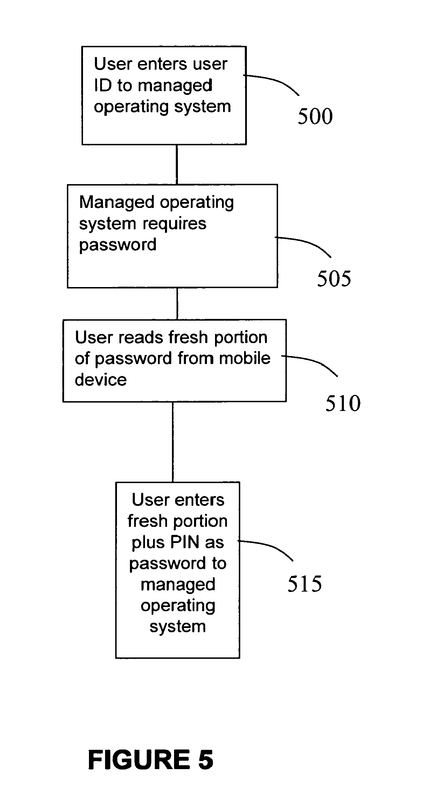

### Referring to Figures 2 and 5, the following steps are carried out:

STEP 500: user enters their user ID in known manner to the managed operating system 225

STEP 505: the managed operating system 225 requires a password

STEP 510: the user remembers their PIN and reads the fresh portion of the password by means of their mobile device 130

STEP 515: the user enters their current password, comprising the PIN plus the fresh portion, which the managed operating system 225 verifies against the current password already stored in its data store 235 since it has already been updated by the password management system 200.

These process steps can be carried out in known manner and are not therefore described further herein. It will be understood that the managed operating system 225 is functioning entirely in known manner, the password management system 200 having updated its data store 235 using an existing "PASSWORD RESET" or equivalent function synchronously with making the fresh portion of the password available to the user via the user device 130.

In embodiments of the invention as described above, the password management system 200 and the managed operating system 225 are supported on separate platform and communicate over a network such as the Internet 110. This is not essential and the two systems could both be in-house, communicating over a LAN, or indeed could even share the same computing platform and thus communicate for example just via an applications protocol interface ("API") of known type for the managed operating system 225.

Also as described above, the batch update process 250 triggers an update to the compound password stored at the managed operating system 225. This is not an essential way of triggering updates which could instead or additionally be made in response to user or administrator request or potentially by the managed operating system 225 itself.

Again as described above, each fresh portion of a password is sent to a location accessible via the user's mobile device 130 by the password change output 215 at the time that a fresh portion of the password is first created and sent to the managed operating system 225. This is not essential. The fresh portion could instead for instance be sent at the request of the user or on polling by the mobile device 130.

### PASSWORD EXAMPLE

An example of using an embodiment of this invention relating to a new user would be:-
A newly enrolled user has a User ID assigned by the managed operating system 225 which is then loaded to a user profile 245 at the password management system 200. He then chooses a PIN, for example "Dr12". This is encrypted and stored in the user profile 245. When the batch update process 250 runs, this user's mobile device 130 (phone) is sent a unique code, for example "713475", as a passcode. When the user next logs on to the managed operating system 225, he enters his User ID and when prompted for a password enters his PIN and the unique code from his phone which in this example would together be "Dr12713475". The PIN and code together provide the password that the managed operating system 225 will use to authenticate the user.

## Claims

1. A password management system, which system comprises:
i) a password updater for updating a password stored in a first storage location, said stored password comprising a combination of a first portion and a second portion;
ii) a password change controller for controlling changes in the second portion of the stored password; and
iii) a password change output for outputting changes made by said controller in said second portion to one or more second storage locations;
wherein the password updater is adapted to update the password stored in the first storage location to comprise said first portion in combination with a second portion changed by the password change controller, which changed second portion is then available at or via the one or more second storage locations by means of the password change output.

2. A system according to Claim 1, further comprising a password portion store for storing copies of first portions of passwords stored in said first storage location, wherein the password updater is adapted to assemble an updated password for use in updating the password stored in the first storage location by reading a first portion of the password from the password portion store and combining with it the second portion provided by the password change controller.

3. A system according to either one of the preceding claims wherein the password updater is adapted to update the password stored in the first storage location by sending the first portion together with the changed second portion to provide an updated password.

4. A system according to any one of the preceding claims wherein the first storage location comprises a password store for an authentication process in a software-based system.

5. A system according to any one of Claims 2, 3 or 4 wherein said password store is constructed to store unitary passwords.

6. A system according to any one of the preceding claims wherein the second storage location is accessible via a user device.

7. A system according to Claim 6 wherein said user device is a mobile device.

8. A system according to any one of the preceding claims wherein the first portion of the password comprises a personal identification number.

9. A system according to Claim 8, further comprising a user profile store for storing personal identification numbers, each for use as a first portion of a password in respect of a user.

10. A system according to any one of the preceding claims wherein the second portion of the password comprises a random code.

11. A system according to any one of the preceding claims wherein the password change controller comprises a code generator for generating new code for use in changing the second portion of the stored password.

12. A system according to any one of the preceding claims wherein the password change controller is adapted to run a batch update of user passwords stored in relation to an authentication process in a software-based system.

13. A system according to any one of the preceding claims, further comprising an update request input and wherein the password change controller is adapted to run an update of a single user password stored in relation to an authentication process in a software-based system, in response to receiving an update request at said input.

14. A system according to any one of the preceding claims wherein the second storage location is provided by a mobile user device.

15. A system according to any one of the preceding claims wherein the password change output is adapted to send changes in said second portion to one or more second storage locations by use of simple message system messages.

16. A system according to any one of the preceding claims wherein the password change output is adapted to send changes in said second portion to one or more second storage locations by use of facsimile transmission.

17. A system according to any one of the preceding claims wherein the password change output is adapted to send changes in said second portion to one or more second storage locations by use of voice messaging.

18. A system according to any one of the preceding claims wherein the password change output is adapted to send changes in said second portion to one or more second storage locations by use of paging.

19. A system according to any one of the preceding claims wherein the password change output is adapted to send changes in said second portion to one or more second storage locations by use of email.

20. A system according to any one of the preceding claims wherein the password change output is adapted to send changes in said second portion to one or more second storage locations by use of an Internet-based message service.

21. A method of updating a password stored for use in an authentication process, the method comprising:
i) assembling an updated password by referring to a data store for a first portion of the updated password and adding a fresh second portion thereto;
ii) resetting the password stored for use in the authentication process to the updated password; and
iii) making the fresh portion accessible to or via a user device.
